# EUROPEAN PATENT APPLICATION

(11) **EP 2 442 038 A2**
(43) Date of publication of application: **18.04.2012**
(21) Application number: 11008187.4
(22) Date of filing: 10.10.2011
(51) Int. Cl.: F24D 19/10

(54) **Integrated apparatus for metering the heat supplied by radiators and for controlling a thermostatic valve**

(30) Priority: 13.10.2010 IT MI20100311
(71) Applicant: Mondial Tecno S.r.l., 20080 Vermezzo (MI) (IT)
(72) Inventor: Savorelli, Maurizio, 20080 Vermezzo (MI) (IT)
(74) Representative: Jaumann, Paolo

(57) **Abstract**

Apparatus comprising a heat metering device and a thermostatic valve control system, the said apparatus being designed to be applied to a valve body located on a radiator water inlet pipe. The device and system are integrated within a single housing 1.

## Description

### DESCRIPTION

The present invention relates to apparatus for measuring radiator output heat.

In order to save energy and also comply with legal obligations, radiator output heat metering devices are becoming increasingly widespread, in particular those for use in communal heating systems where the breakdown of consumption costs was not originally envisaged. These devices typically include an electronic control unit and a temperature sensor, suitably located on the surface of the radiator. The device is activated when the surface temperature exceeds a certain threshold (e.g. 29 ° C) and, based on criteria taking into consideration meter radiator size and model, it assigns a thermal output rating to the surface temperature and, by integrating the said rating into the time during which the temperature remains above the activation threshold, provides the heat output rating to be recorded. These devices also use, although rarely, a sensor designed to measure the temperature of the environment to be heated, so as to use the temperature difference between the radiator and the environment instead of simply the radiator temperature value, in order to obtain more correct thermal output values. To reduce heat consumption, thus allowing efficient environment temperature control, the application of heat cost allocators is usually associated with the application of thermostatic valves, which can be of the thermo-mechanical kind, with a thermal expansion mechanism that acts on a piston valve, or of the electronic kind, equipped with a sensor for measuring a temperature representative of the environment temperature, which operates a motor, usually electric, designed to act on the piston shutter.

With the systems described above, the heat meter remains active even with the valve closed, therefore when there is no heat supplied by the plant, until the surface temperature of the radiator falls below the aforesaid activation threshold. Moreover, the presence of two separate devices causes higher plant installation costs and requires more space.

The problems outlined above have been overcome, according to the present invention, by means of apparatus comprising a heat metering device and a thermostatic system for valve control, the said apparatus being designed to be applied to a valve body located on a radiator inlet pipe.

In this way the components are integrated into a single block designed to be applied to the valve body in such a way as to act on the said body in a single operation.

The said valve body can, preferably, feature a piston shutter, which is, optionally, maintained in the closed position by a spring, such as those commonly used for thermostatic valves of a known type. Preferably, the apparatus comprises a single housing for the said device and the said system. The valve control system is preferably of the electronic type, comprising an electric motor designed to act on the valve piston. However, a thermo-mechanical system similar to those of a known type may be envisaged.

According to a preferred aspect of the invention, the metering device is connected to the control system in such a way as to measure the heat only when the valve is open. The connection may be a logical one, for example, the device may include an electronic control unit designed to receive data on the valve's condition from a specific sensor or an electronic control unit for the valve. According to one possible aspect of the invention, a single integrated electronic control unit can perform the metering and can control the valve with a appropriate motor.

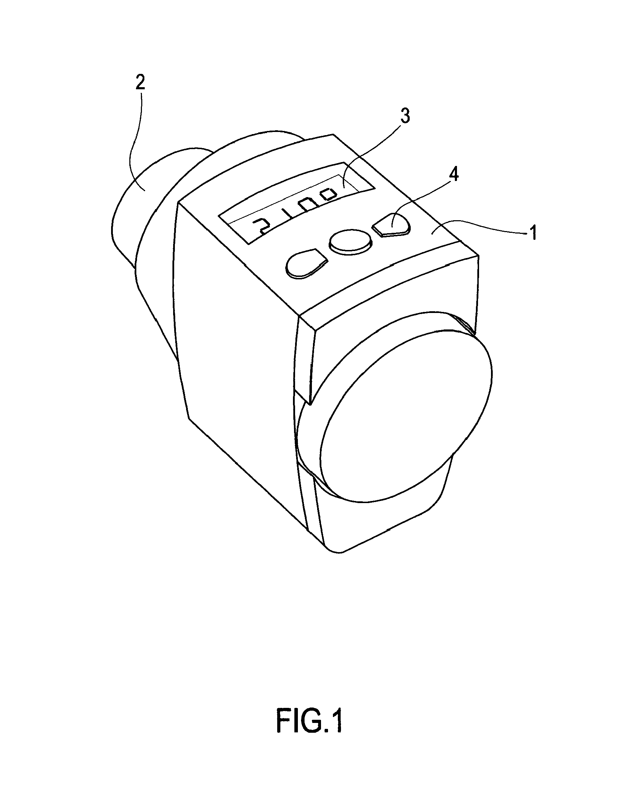

The invention will now be illustrated, by way of a non-limiting example, through a description of a preferred embodiment of the invention, with the help of Figure 1 attached hereto, which is a schematic representation of the apparatus according to the present invention.

The apparatus features a housing 1, which contains one or more electronic control units and a valve control system. It features the connection 2, of an appropriate kind, which is designed to connect the apparatus to the valve body located on the radiator water supply pipe, running from the heating system, so that the control system can act on the valve. The connection can be of a known type, e.g. screw or bayonet, of the kind used by commonly known thermostatic systems with commonly known valve bodies.

According to the aspect of the invention shown here by way of an example, the electronic control unit controls valve opening. To this end, if the valve is electronic, it may be connected with a first temperature sensor for measuring a temperature representative of the external temperature. The sensor can be located in the housing, in a suitable location, as also occurs for the thermostatic valves according to the commonly known technique, or even externally, and can be connected via cable or even via remote connection, such as a radio frequency connection.

The electronic control unit is also designated to heat output metering. To this end, the ECU is connected to a second temperature sensor designed to measure a temperature representative of the radiator temperature, the said temperature being designed to facilitate heat exchange with the external environment. The second temperature sensor is suitably positioned inside or outside the housing, for example on the radiator or, preferably, on the water inlet pipe or, more preferably, upstream of the valve. For example, the second sensor may be ring-shaped so as to be positioned around the pipe. The apparatus may be supplemented with other elements, such as batteries, for example of the type commonly used for meters and electronic thermostatic valves. The apparatus can be designed to communicate with other external elements of a commonly known type, by means of radio frequency systems, for example; those elements may be, for example, external sensors and centralizers, for the collection of the data measured by the meter, and/or remote controls for controlling and programming of the apparatus. It may also, or alternatively, have manual controls 4 or a data connection, for example a USB port, for connection with a memory or a processor of a suitable type, in particular, for programming. The device and the control system, and therefore the control unit in which they are integrated, if this is the case, are preferably programmable, in order to introduce the most appropriate control and metering logic and to adjust the desired temperature. A display unit 3 may be provided for displaying data such as temperature, other operating and programming data, and metering data.

A programmable chronothermostat may be included in the apparatus, for example, integrated into the control unit, which can control the thermostatic valve and, if desired, be programmed to adjust the operation of the valve, for example, on a daily or weekly basis.

The metering device is designed to start open-valve metering as soon as the temperature of the second sensor exceeds a preset threshold, for example 29 ° C. The metering is interrupted when the valve is closed. In the case of electronic valves, with a control system designed to position the valve, depending on the temperature and/or the system settings, in intermediate positions between maximum opening and the closed position, the metering device will, preferably, be able to take this into account when counting calories, according to preset logic.

## Claims

1. Apparatus comprising a device for heat metering and a thermostatic valve control system, the said apparatus being designed to be applied to a valve body located on a radiator water inlet pipe.

2. Apparatus according to claim 1, wherein the said valve body features a piston shutter, which is, optionally, maintained in the closed position by a spring.

3. Apparatus according to claims 1 or 2, comprising a single housing enclosing the said device and the said system.

4. Apparatus according to any of the previous claims, wherein the valve control system is preferably of the electronic type, comprising an electric motor designed to act on the valve piston.

5. Apparatus according to any of the previous claims, wherein the metering device is connected to the control system in such a way as to measure the heat only when the valve is open.

6. Apparatus according to any of the previous claims, comprising a temperature sensor designed to measure a temperature correlated with that of the radiator with the valve open and, optionally, a sensor which can be positioned on the radiator water inlet pipe, upstream of the valve body.

7. Apparatus according to claims 5 and 6, wherein the device is designed to start measuring the heat with the valve open when the temperature measured by the second sensor reaches a predefined threshold.

8. Apparatus according to any of the previous claims, comprising a programmable electronic control unit, designed to perform the functions of the said device and/or the said system, which is, optionally, programmable using manual means, remote control, or a cable connection and, optionally, via a USB port.

9. Apparatus according to the previous claim designed to transmit the metering data to external elements, such as data centralizers via a radio frequency connection.

10. Apparatus according to any of the previous claims, comprising a chronothermostat.
